# EUROPEAN PATENT APPLICATION

(11) **EP 4 768 341 A1**
(43) Date of publication of application: **01.07.2026**
(21) Application number: 25187360.0
(22) Date of filing: 03.07.2025
(51) Int. Cl.: B60R 9/10, B60D 1/06

(54) **BALL-CLAMP COUPLING STRUCTURE FOR BIKE RACKS THAT IS ADAPTABLE TO TRAILER HITCH BALLS OF VARIOUS SIZES**

(30) Priority: 31.12.2024 TW 113151641
(71) Applicant: King Rack Industrial Co., Ltd., Taichung City (TW)
(72) Inventor: Wang, Chiu-Kuei, Taichung City (TW)
(74) Representative: Cabinet Chaillot

(57) **Abstract**

A ball-clamp coupling structure for bike racks adaptable to trailer hitch balls of various sizes includes a bolt body, a cover piece, a bell-shaped hood, and a knob. The cover piece is used to secure a trailer hitch ball. Through the bolt at the top of the cover piece threading with the knob, the cover piece is brought into and secured inside the bell-shaped hood. When the trailer hitch ball is smaller, in addition to adjusting the position of the cover piece via the knob, the distance of the slot in the bell-shaped hood is further adjusted through screws and nuts installed on the clamping plates on the outside of the bell-shaped hood, causing the bell-shaped hood to press tightly against the outside of the cover piece, thereby achieving the effect of stably securing the trailer hitch ball.

## Description

### BACKGROUND OF THE INVENTION

### 1. Fields of the invention

The present invention relates to the field of bike rack equipment, and more particularly, to a ball-clamp coupling structure for bike racks that is suitable for trailer hitch balls of various sizes. Through the design of the covering component, it can firmly grip the trailer hitch ball, achieving the effect of stable assembly.

### 2. Descriptions of Related Art

The ball-clamp coupler for a rear car-mounted bike rack proposed by the applicant's former Taiwan Utility Model Patent No. M319196 includes a bolt body, a cover piece, a bell-shaped hood, a knob, etc. The bell-shaped cover piece encompasses the head of the bolt body, then the threaded end of the bolt is sequentially inserted through a bell-shaped hood that combines with the bike rack, and a knob is installed. Finally, the knob is tightened to force the bell-shaped hood to secure the cover piece onto the trailer hitch ball at the rear of the car, thus achieving the purpose of attaching the bike rack to the rear of the car. A locking device placed inside the knob restricts the movement of the knob to provide an anti-theft function.

However, there are still aspects that need improvement.

Since the trailer hitch balls come in different sizes, designing different-sized ball-clamp coupling structures for different-sized trailer balls would increase costs for manufacturers and easily create inventory problems. How to solve the aforementioned issues has become a challenge that manufacturers need to address.

The present invention intends to provide a ball-clamp coupling structure for bike racks that is suitable for trailer hitch balls of various sizes to eliminate shortcomings mentioned above.

### SUMMARY OF THE INVENTION

The present invention relates to a ball-clamp coupling structure for bike racks, and comprises a bolt having a head and a shank with threads. A cover piece is a bell-shaped structure and comprises four covering units. The cover piece includes a cylindrical part on a top thereof, and the cylindrical part has a groove defined in an outer periphery thereof. A ball socket is formed in an inside of the cover piece so as to accommodate a trailer hitch ball. A protruding part extends inward from a bottom of the ball socket so as to engage with a flat recessed portion at a lower end of the trailer hitch ball. An outside of the ball socket forms a wall surface. A neck is formed between the cylindrical part and the ball socket. A recess is formed in an inside of the neck, and the head is accommodated in the recess.

A bell-shaped hood has a chamber formed therein, and the cover piece is accommodated in the chamber. A passage is defined through a top of the bell-shaped hood, and the bolt extends through the passage. A T-shaped slot is defined through a wall of the bell-shaped hood. Two clamping plates protrude outward along two sides of the slot, and each of the clamping plates has a hole. A screw passes through the holes, and a nut is threadedly connected to the screw. Through a fastening force of the screw and the nut, an inner wall of the chamber presses tightly from against the wall surface of the cover piece.

A knob is threadedly connected to the shank of the bolt so as to adjust a height of the cover piece in the chamber of the bell-shaped hood, and abut against the bell-shaped hood.

When holding a larger-volume trailer hitch ball, the cover piece is fitted onto the trailer hitch ball. Then the knob is rotated, causing the cover piece to move upward driven by the bolt, so that the trailer hitch ball is secured in the chamber of the bell-shaped hood. The protruding parts of the ball sockets are engaged with a flat recessed portion at a lower end of the trailer hitch ball.

When holding a smaller-volume trailer hitch ball, the cover piece is fitted onto the trailer hitch ball. When the knob is rotated, the cover piece is driven upward by the bolt. By tightening the screw and the nut, the clamping plates contract toward the slot, the inner wall of the chamber of the bell-shaped hood presses tightly against the wall surface of the cover piece, so that the ball socket of the cover piece moves upward and firmly secures the trailer hitch ball. The protruding parts of the ball sockets are engaged with the flat recessed portion at a lower end of the trailer hitch ball, ensuring that the trailer hitch ball is tightly held by the cover piece without detachment.

The primary object of the present invention is to provide a ball-clamp coupling structure for bike racks that is adaptable to trailer hitch balls of various sizes, utilizing the knob and bell-shaped hood to tightly press against the inner side of the cover piece, enabling the cover piece to firmly grip the trailer hitch ball device.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is an exploded view of the present invention;
Figure 2 illustrates the usage state diagram of the present invention holding a large trailer hitch ball;
Figure 3 is a schematic diagram of using screws and nuts to tighten the bell-shaped hood;
Figure 4 illustrates the usage state diagram of the present invention holding a small trailer hitch ball;
Figure 5 shows the relaxed state diagram of the cover piece, and
Figure 6 is a schematic usage diagram of the present invention holding a trailer hitch ball.

### DETAILED DESCRIPTION OF THE PREFERRED EMBODIMENT

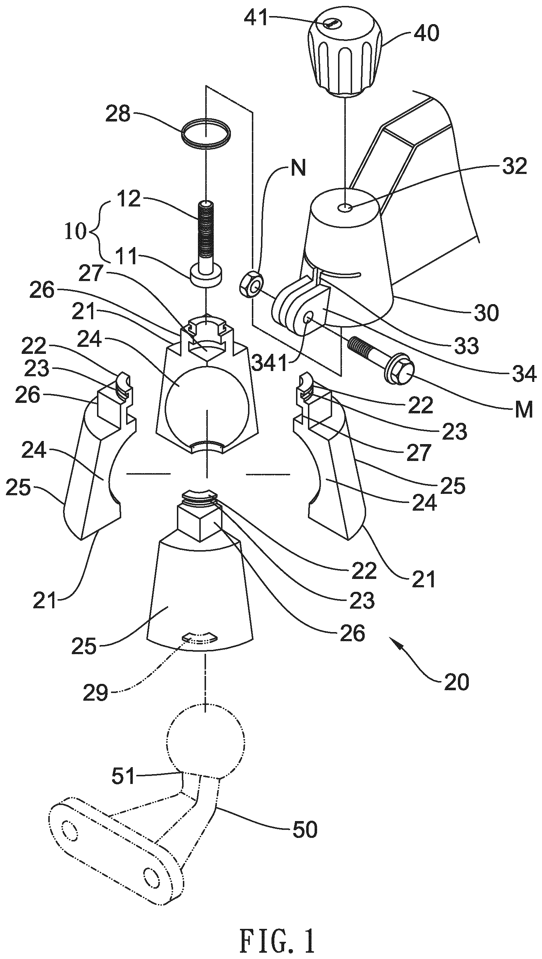

Referring to Figure 1, the ball-clamp coupling structure for bike racks adaptable to trailer hitch balls of various sizes of the present invention comprises a bolt 10, a cover piece 20, a bell-shaped hood 30, a knob 40, and a trailer hitch ball 50.

The bolt 10 has a head 11 and a threaded shank 12 which extends from the head 11.

The cover piece 20 is a bell-shaped structure consisting of four covering units 21. After assembly, the cover piece 20 forms a cylindrical part 22 formed on a top thereof and the cylindrical part 22 has a groove 23 defined in an outer periphery thereof. The inside of the cover piece 20 forms a ball socket 24 for covering the trailer hitch ball 50. Additionally, at the bottom of the ball socket 24, there is a protruding part 241. The protruding part 241 of the cover piece 21 is used to engage with a flat recessed portion 51 at the lower end of the trailer hitch ball 50. The protruding part 241 covers the flat recessed portion 51 with a diameter "D" between 28 to 32 millimeters (mm). On the outside of the ball socket 24, a wall surface 25 is formed. A neck 26 is formed between the cylindrical part 22 and the ball socket 24. A recess 27 is formed on the inside of the neck 26 so as to accommodate the head 11. Moreover, at the bottom of the covering unit 21, there is a protrusion 29 to prevent the cover piece 20 from touching the ground. The function of the protrusion 29 is to prevent the bike rack from directly contacting the ground, which would cause wear to the cover piece 20.

Furthermore, some trailer hitch balls 50 are in a shape similar to an egg cone. When the covering unit 21 is mounted to the trailer hitch ball 50 and lifts, it can lift through the concave interior of the protruding part 241, and thereby engaging the protruding part 241 into the flat recessed portion 51.

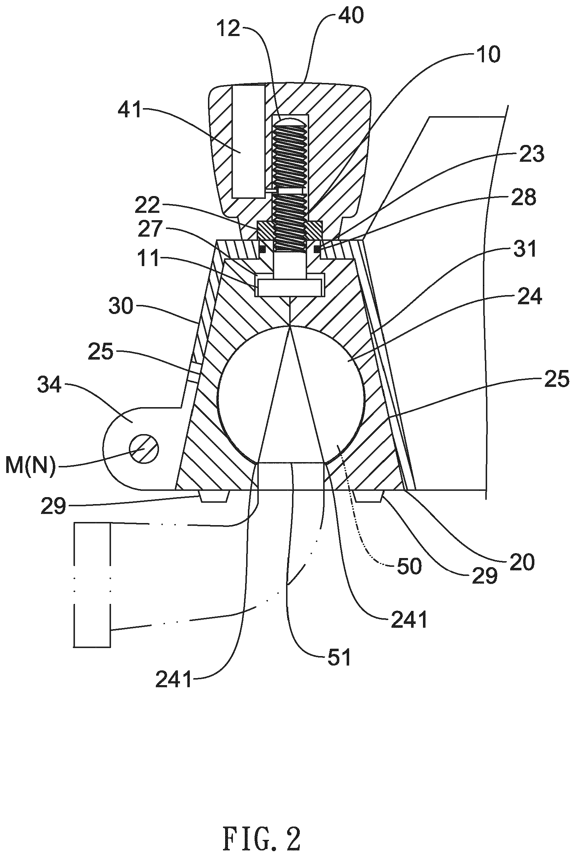

As shown in Figures 1 and 2, the interior of the bell-shaped hood 30 forms a chamber 31 for holding the cover piece 20. The top of the bell-shaped hood 30 has a passage 32 through the bolt 10 extends. Also, one end of the bell-shaped hood 30 has a T-shaped slot 33, with clamping plates 34 extending outward along both the left and right sides of the slot 33. The clamping plates 34 have holes 341. After a screw "M" passes through the holes 341, a nut "N" is threaded onto the screw "M". Through the fastening force of the screw "M" and the nut "N", the inner wall of the chamber 31 is pressed tightly from the outside against the wall surface 25 of the cover piece 20. Moreover, the groove 23 is installed with an O-ring 28. The O-ring 28 can connect to the passage 32, preventing moisture from flowing into the chamber 31.

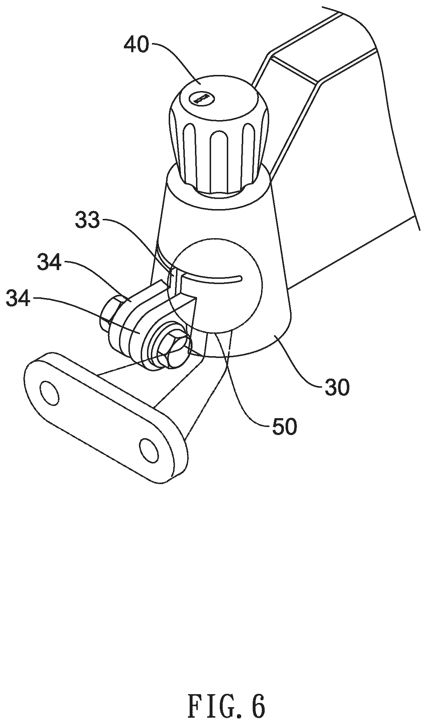

As shown in Figures 1, 2, and 6, the knob 40 is threaded onto the shank 12 of the bolt 10, and adjusts the height of the cover piece 20 in the chamber 31 of the bell-shaped hood 30, and abuts against the bell-shaped hood 30. Additionally, the knob 40 is also equipped with a locking device 41 that restricts movement. By means of the locking device 41, it can be locked onto the shank 12 of the bolt 10.

As shown in Figure 2, when holding a larger-volume trailer hitch ball 50, the cover piece 20 is fitted onto the trailer hitch ball 50, then the knob 40 is rotated, causing the cover piece 20 to move upward driven by the bolt 10, thus allowing the trailer hitch ball 50 to be fixed in the chamber 31 of the bell-shaped hood 30.

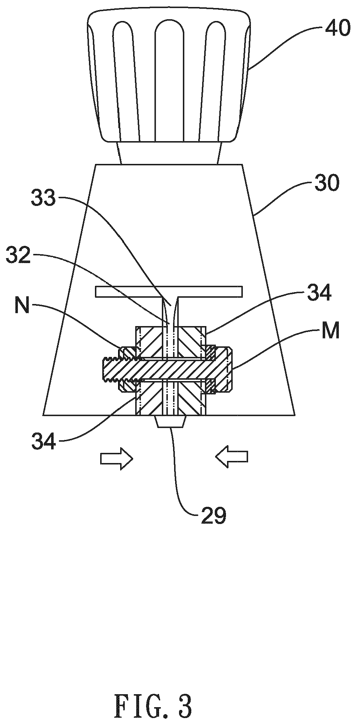

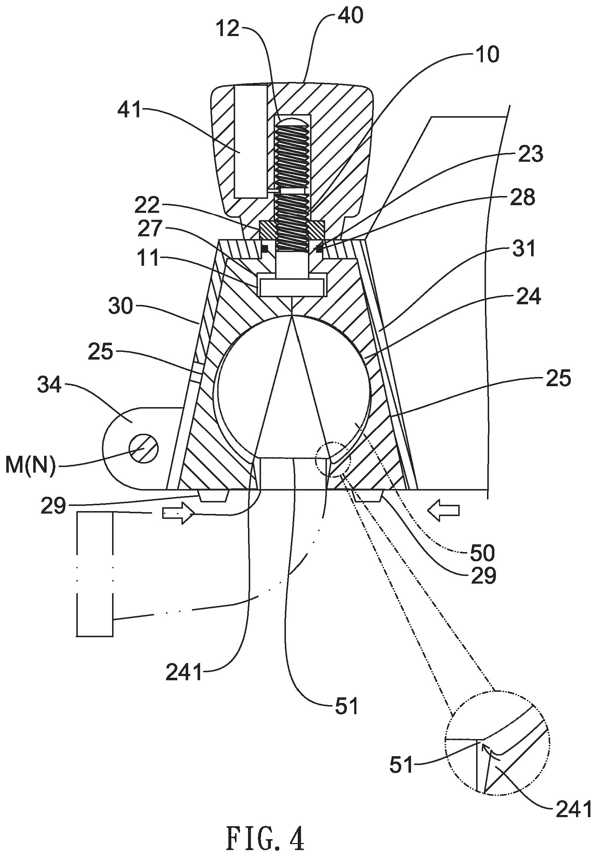

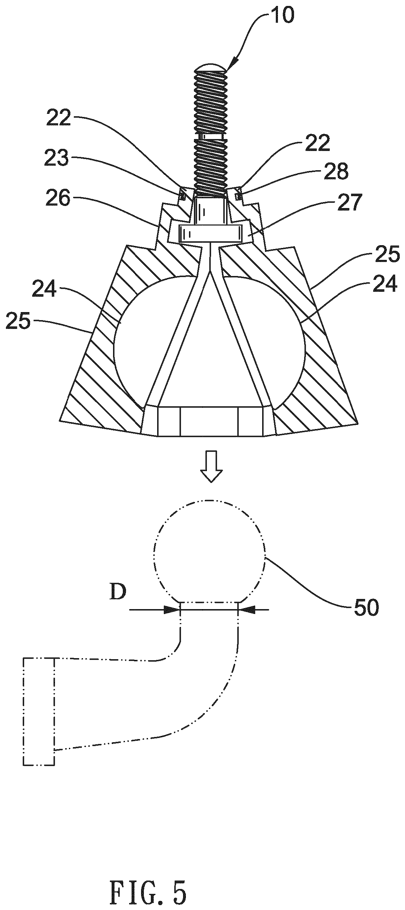

As shown in Figures 3, 4, 5, and 6, when holding a smaller-volume trailer hitch ball 50, the cover piece 20 is fitted onto the trailer hitch ball 50, then as the knob 40 is rotated, the cover piece 20 is driven upward by the bolt 10, followed by tightening the screw "M" and the nut "N", causing the clamping plates 34 to contract toward the slot 33, thereby making the chamber 31 of the bell-shaped hood 30 press tightly against the wall surface 25 of the cover piece 20, and allowing the ball socket 24 of the cover piece 20 to hook upward and firmly secure the trailer hitch ball 50.

The basic usage of the present invention is the same as the conventional one, but by tightening the screw "M" and the nut "N" on the clamping plates 34, the cover piece 20 can be pressed tightly, making it suitable for holding trailer hitch balls 50 of various sizes.

As shown in Figures 1 and 2, the protruding part 241 at the lower end of the ball socket 24 can engage with the flat recessed portion 51 at the lower end of the trailer hitch ball 50. This prevents the trailer hitch ball 50 from detaching due to uneven ground or vibration.

While we have shown and described the embodiment in accordance with the present invention, it should be clear to those skilled in the art that further embodiments may be made without departing from the scope of the present invention.

## Claims

1. A ball-clamp coupling structure for bike racks, comprising:
a bolt (10) having a head (11) and a shank (12) with threads;
a cover piece (20) being a bell-shaped structure consisting of four covering units (21), the cover piece (20) including a cylindrical part (22) on a top thereof, the cylindrical part (22) having a groove (23) defined in an outer periphery thereof, a ball socket (24) formed in an inside of the cover piece (20) so as to accommodate a trailer hitch ball (50), a protruding part (241) extending inward from a bottom of the ball socket (24) so as to engage with a flat recessed portion (51) at a lower end of the trailer hitch ball (50), an outside of the ball socket (24) forming a wall surface (25), a neck (26) formed between the cylindrical part (22) and the ball socket (24), a recess (27) formed in an inside of the neck (26), the head (11) accommodated in the recess (27);
a bell-shaped hood (30) having a chamber (31) formed therein, the cover piece (20) being accommodated in the chamber (31), a passage (32) defined through a top of the bell-shaped hood (30), the bolt (10) extending through the passage (32), a T-shaped slot (33) defined through a wall of the bell-shaped hood (30), two clamping plates (34) protruding outward along two sides of the slot (33), the clamping plates (34) having holes (341), a screw (M) passing through the holes (341), a nut (N) threadedly connected to the screw (M), through a fastening force of the screw (M) and the nut (N), an inner wall of the chamber (31) pressing tightly from against the wall surface (25) of the cover piece (20), and
a knob (40) threadedly connected to the shank (12) of the bolt (10) so as to adjust a height of the cover piece (20) in the chamber (31) of the bell-shaped hood (30), and abut against the bell-shaped hood (30);
when holding a larger-volume trailer hitch ball (50), the cover piece (20) is fitted onto the trailer hitch ball (50), the knob (40) is rotated, causing the cover piece (20) to move upward driven by the bolt (10), so that the trailer hitch ball (50) is secured in the chamber (31) of the bell-shaped hood (30), the protruding parts (241) of the ball sockets (24) are engaged with a flat recessed portion (51) at a lower end of the trailer hitch ball (50);
when holding a smaller-volume trailer hitch ball (50), the cover piece (20) is fitted onto the trailer hitch ball (50), as the knob (40) is rotated, the cover piece (20) is driven upward by the bolt (10), by tightening the screw (M) and the nut (N), the clamping plates (34) contract toward the slot (33), the inner wall of the chamber (31) of the bell-shaped hood (30) presses tightly against the wall surface (25) of the cover piece (20), so that the ball socket (24) of the cover piece (20) moves upward and firmly secures the trailer hitch ball (50), the protruding parts (241) of the ball sockets (24) are engaged with the flat recessed portion (51) at a lower end of the trailer hitch ball (50), ensuring that the trailer hitch ball (50) is tightly held by the cover piece (20) without detachment.

2. The ball-clamp coupling structure for bike racks as claimed in claim **1,** wherein an O-ring (28) is engaged with the groove (23) and seals the passage (32) so as to prevent moisture from flowing into the chamber (31).

3. The ball-clamp coupling structure for bike racks as claimed in claim 1, wherein the knob (40) includes a locking device (41).

4. The ball-clamp coupling structure for bike racks as claimed in claim 1, wherein each of the covering units (21) includes a protrusion (29) extending from a bottom thereof.

5. The ball-clamp coupling structure for bike racks as claimed in claim 1, wherein, when the ball socket (24) of the cover piece (20) holds upward to secure the trailer hitch ball (50), the protruding parts (241) of the ball sockets (24) are engaged with the flat recessed portion (51) at the lower end of the trailer hitch ball (50), causing the trailer hitch ball (50) to be tightly held by the cover piece (20) without detachment.
